# EUROPÄISCHE PATENTSCHRIFT

(11) **EP 2 857 188 B1**
(45) Veröffentlichungstag und Bekanntmachung des Hinweises auf die Patenterteilung: **26.09.2018**
(21) Anmeldenummer: 14002089.2
(22) Anmeldetag: 17.06.2014
(51) Int. Cl.: B32B 5/02, B32B 27/08, B32B 27/12, B32B 7/02, B32B 7/14, B32B 3/08, B32B 1/08

(54) **AUSKLEIDUNGSSCHLAUCH MIT EINEM ÜBERLAPPEND DURCH KLEBEBAND VERBUNDENEN AUSSENFOLIENSCHLAUCH ZUR AUSKLEIDUNG VON ROHRLEITUNGEN UND VERFAHREN ZUR HERSTELLUNG EINES SOLCHEN**
CLADDING HOSE WITH AN OVERLAPPING EXTERNAL FILM HOSE CONNECTED BY ADHESIVE TAPE FOR CLADDING PIPES AND METHOD FOR MANUFACTURING THE SAME
GAINE DOTÉE D'UN TUYAU EXTÉRIEUR EN FILM SE CHEVAUCHANT ET FIXÉ PAR BANDE ADHÉSIVE, DESTINÉE AU REVÊTEMENT DE CONDUITES, ET SON PROCÉDÉ DE FABRICATION

(30) Priorität: 09.09.2013 DE 102013014796
(43) Veröffentlichungstag der Anmeldung: 08.04.2015
(73) Patentinhaber: Brandenburger Patentverwertung GBR, 76829 Landau (DE)
(72) Erfinder: Duttenhöfer, Peter, 76831 Ilbesheim (DE); Blenke, Stefan, 76829 Landau/Pfalz (DE)
(74) Vertreter: Kesselhut, Wolf

(56) Entgegenhaltungen:
- EP-A1- 1 262 708
- EP-A1- 1 785 659
- EP-A1- 2 692 507
- WO-A2-2012/065698
- DE-A1-102007 038 197
- US-B1- 6 679 966

## Beschreibung

Die Erfindung betrifft einen Auskleidungsschlauch mit einem überlappend durch Klebeband verbundenen Außenfolienschlauch zur Auskleidung von Rohrleitungen sowie ein Verfahren zur Herstellung eines solchen gemäß dem Oberbegriff von Anspruch 1 und 7.

Auf dem Gebiet der grabenlosen Sanierung von defekten Rohrleitungen, wie z.B. defekten Abwasserleitungen oder Abwasserkanälen, werden zunehmend Auskleidungsschläuche eingesetzt, die als "Inliner" bezeichnet werden und aus einem Fasermaterial, insbesondere aus Glasfasergewebe, bestehen, welches mit einem flüssigen Reaktionsharz getränkt ist, das nach dem Einziehen des Auskleidungsschlauchs in die Rohrleitung und Expandieren desselben mit Hilfe von Druckluft durch Licht einer Strahlungsquelle ausgehärtet wird. Ein solcher Auskleidungsschlauch sowie ein Verfahren zur Herstellung eines solchen sind beispielsweise aus der WO-A00/73692 bekannt, wobei der dort beschriebene Auskleidungsschlauch einen Innenfolienschlauch besitzt, auf den die harzgetränkten Faserbänder auf einem Wickeldorn unter Bildung einer Faserlage überlappend aufgewickelt werden, die von einem Außenfolienschlauch umgeben ist.

Aus der nicht vorveröffentlichten EP 2 692 507 A1 ist ein Auskleidungsschlauch mit einem Innenfolienschlauch zur Auskleidung von Rohrleitungen bekannt, der aus einem thermisch verschweißbaren Trägermaterial besteht, auf dessen Außenseite eine aufkaschierte Vliesschicht angeordnet ist, auf welche eine Lage aus Fasermaterial aufgebracht ist, die mit einem Reaktionsharz getränkt ist, das durch UV-Licht ausgehärtet werden kann. Um nach dem Verschweißen des Innenfolienschlauchs im Überlappungsbereich der übereinander geführten Randabschnitte eine besonders gute Anhaftung des harzgetränkten Fasermaterials zu erhalten, weist der Überlappungsbereich auf seiner Außenseite eine Struktur auf. Das Dokument gibt keinen Hinweis darauf, die beiden Randabschnitte eines die Faserlage umschließenden Außenfolienschlauchs über ein Klebeband miteinander zu verbinden, welches sich in Längsrichtung des Auskleidungsschlauchs erstreckt.

Weiterhin ist es aus der EP 0 100 029 A1 bekannt, den für einen Auskleidungsschlauch verwendeten Innenfolienschlauch durch Aufbringen einer nicht-thermoplastischen sowie einer darauf angeordneten thermoplastischen Polyurethanharnstoffbeschichtung auf einen bahnförmigen textilen Werkstoff in Form eines Polyestervlieses zu erzeugen und die Längsränder der Folie miteinander zu vernähen. Die Naht wird anschließend durch einen thermisch verschweißbaren oder ggf. auch verklebbaren Folienstreifen abgedichtet. Die Schrift gibt keinen Hinweis darauf, wie das Verbinden der beiden Längsränder des beschichteten textilen Werkstoffs und das Aufbringen des Folienstreifens im Detail erfolgt.

Weiterhin ist aus der WO 2012/065698 der Anmelderin der vorliegenden Erfindung ein Verfahren und eine Vorrichtung zur Herstellung eines Auskleidungsschlauchs mit einem endlosen Innenfolienschlauch mit einer darauf aufkaschierten Vliesschicht bekannt, bei dem die Längsränder auf der Innenseite des Folienschlauchs im Überlappbereich durch ein aufgeklebtes oder aufgeschweißtes Folienband überdeckt werden. Obgleich durch das Folienband eine im Wesentlichen luftdichte Schweißnaht erhalten wird, die einen Austritt von Styroldämpfen aus der den Innenfolienschlauch umgebenden Lage aus harzgetränkten Faserbändern wirksam verhindert, erfordert das Aufschweißen des Folienbandes das Einbringen von zwei Schweißnähten, wodurch sich der Fertigungsaufwand erhöht und die Fertigungsgeschwindigkeit entsprechend verringert. Die Schrift gibt keinen Hinweis, auch den Außenfolienschlauch durch Aufbringen eines Klebebandes in einem Überlappungsbereich eng anliegend um die Faserbandlage herum anzuordnen.

Weiterhin werden im Hause der Anmelderin zuvor erwähnte Auskleidungsschläuche gefertigt, bei denen der Außenfolienschlauch durch thermisches Verschweißen einer unteren und einer oberen, für UV-Licht undurchlässigen Folienbahn mit Hilfe zweier seitlicher Kunststoffschweißvorrichtungen erzeugt wird, die mit der Vorschubgeschwindigkeit des fortlaufend erzeugten Faserbandschlauchs linear seitlich mitbewegt werden und die die an den beiden Seiten des Faserschlauchs übereinander geführten und flach aufeinander liegenden Randabschnitte der unteren und oberen Folienbahn miteinander verschweißen. Hierbei ergibt sich das Problem, dass die an beiden Seiten des fertigen Außenfolienschlauchs entstehenden Schälnähte gegenüber Überlappnähten beim Expandieren des Auskleidungsschlauchs nur erheblich geringeren Scherkräften ausgesetzt werden können, was eine Kalibration des Durchmessers des Auskleidungsschlauchs im Kanal vor dem Aushärten erschwert. Hinzu kommt, dass die an beiden Seiten des fertig verschweißten Außenfoienschlauchs flügelartig abstehenden Verbindungsabschnitte nach dem Einziehen des Auskleidungsschlauchs in einen Kanal und Expandieren desselben zwischen der Kanalinnenwand und der Außenseite des Auskleidungsschlauchs faltenartig überlappen. Die entstehenden faltenartigen Überlappungen der flügelartigen Verbindungsabschnitte können sich bei Auskleidungsschläuchen mit kleinen Innendurchmessern und geringen Wandstärken in nachteiliger Weise als störende Verwerfung an der Innenwand des fertig ausgehärteten Auskleidungsschlauchs abzeichnen.

Demgemäß ist es eine Aufgabe der vorliegenden Erfindung einen Auskleidungsschlauch mit einem Innenfolienschlauch, einer auf diesem angeordneten Lage aus harzgetränktem Fasermaterial sowie einem auf der Lage aus Fasermaterial aufgebrachten Außenfolienschlauch zu schaffen, welcher sich kostengünstig und mit hoher Qualität herstellen lässt und welcher die zuvor erwähnten Nachteile des Standes der Technik vermeidet.

Diese Aufgabe wird erfindungsgemäß durch die Merkmale von Anspruch 1 gelöst.

Weitere Merkmale der Erfindung sind in den Unteransprüchen beschrieben.

Gemäß der Erfindung umfasst ein Auskleidungsschlauch zur Auskleidung von Rohrleitungen, insbesondere von defekten Kanälen, einen Innenfolienschlauch, auf dem eine Lage aus Fasermaterial angeordnet ist, die mit einem flüssigen Reaktionsharz getränkt ist, welches durch Bestrahlen mit UV-Licht aushärtet. Auf der Außenseite des Fasermaterials, das vorzugsweise aus einzelnen Faserbändern besteht, die über einem Wickeldorn überlappend übereinander gewickelt werden, ist ein Außenfolienschlauch angeordnet, der aus einem für UV-Licht undurchlässigen Folienmaterial besteht.

Der erfindungsgemäße Auskleidungsschlauch zeichnet sich dadurch aus, dass dieser einen ersten radial innenliegenden Randabschnitt und einen zweiten, auf der Außenseite des ersten Randabschnitts in einem Überlappungsbereich aufliegenden zweiten Randabschnitt besitzt. Die beiden überlappenden Randabschnitte sind erfindungsgemäß über ein sich in Längsrichtung des Auskleidungsschlauchs erstreckendes Klebeband miteinander verbunden, welches bevorzugt von oben her während der endlosen Fertigung des Auskleidungsschlauchs mit seiner klebenden Seite auf die überlappenden Randabschnitte abgerollt wird.

Durch die Erfindung ergibt sich der Vorteil, dass die beiden Randabschnitte durch das Klebeband nach Art einer Überlappnaht miteinander verbunden sind, wodurch sich im Gegensatz zu einer Schälnaht eine erheblich höhere Zug- bzw. Reißfestigkeit gegenüber in Umfangsrichtung auf die beiden Randabschnitte wirkenden Zugkräften ergibt. Derartige, in Umfangsrichtung des verklebten Auskleidungsschlauchs wirkende Zugkräfte treten insbesondere beim Expandieren des Auskleidungsschlauchs mit Hilfe von Druckluft auf, die in den Auskleidungsschlauch eingeleitet wird, nachdem dieser im zusammengelegten Zustand in einen zu sanierenden Kanal eingezogen wurde. Hierbei stellt es einen besonderen Vorteil dar, dass die Verklebung der Randabschnitte des Außenfolienschlauchs im Überlappungsbereich auch beim Einsatz von kostengünstigem Klebeband, welches einseitig mit einer dauerklebrigen Klebstoffschicht beschichtet ist, eine hohe Scherfestigkeit aufweist, was es ermöglicht, den Umfang des Auskleidungsschlauchs beim Expandieren desselben durch Erhöhen oder erniedrigen des Drucks der eingesetzten Druckluft auf einen gewünschten Wert zu kalibrieren. Hierbei wirkt der umfänglich zu einem endlosen Schlauch geschlossene, für UV-Licht undurchlässige Außenfolienschlauch sozusagen als Gegenlager für die Lage aus Fasermaterial, deren gewickelte Faserbänder sich relativ zueinander verschieben können und dadurch ein Aufweiten der Faserlage beim Einbringen der Druckluft in radialer Richtung gestatten.

Bei der bevorzugten Ausführungsform der Erfindung besitzt der Außenfolienschlauch einen ersten oberen Umfangsabschnitt, der bevorzugt aus einer ersten von oben her auf die Faserlage abgerollte Folienbahn besteht. Der Außenfolienschlauch weist weiterhin einen zweiten unteren Umfangsabschnitt auf, der aus einer zweiten Folienbahn besteht, die von unten her an die Faserbandlage herangeführt wird. Das Heranführen der zweiten Folienbahn an die Faserbandlage erfolgt dabei bevorzugt über eine Umformeinrichtung, insbesondere eine bekannte Formschulter, über die die von einer Rolle abgezogene zweite Folienbahn in der Weise geführt wird, dass die Längsränder um die Seitenbereiche des vorzugsweise flach liegenden Faserschlauchs herum geschlagen werden, so dass am ersten Umfangsabschnitt ein erster und ein zweiter radial außenliegender Randabschnitt und am zweiten Umfangsabschnitt ein zu diesen Randabschnitten korrespondierender erster und zweiter radial innenliegender Randabschnitt geformt werden. Die Breite der ersten und zweiten Folienbahn ist dabei so gewählt, dass die beiden Randbereiche der Umfangsabschnitte in einem Bereich von bevorzugt 10 mm bis 50 mm überlappen, so dass sichergestellt ist, dass von außen her kein UV-Licht in das Fasermaterial eindringen und das darin enthaltene flüssige Reaktionsharz frühzeitig aushärten kann. Um den ersten Umfangsabschnitt und den zweiten Umfangsabschnitt in den beiden Überlappungsbereichen miteinander zu verbinden und dadurch die beiden Folienbahnen zu einem umfänglich geschlossenen Außenfolienschlauch zu formen, wird gemäß der Erfindung ein einseitig klebendes Klebeband, vorzugsweise ein Gewebeband, in den beiden Überlappungsbereichen über die Folienränder geklebt, welches bevorzugt von einer Rolle von oben her auf die Überlappungsbereiche aufgerollt und z.B. über eine Andruckvorrichtung, z.B. eine Bürste oder eine Andruckrolle auf die Oberseite des Auskleidungsschlauchs gepresst wird.

Bei der bevorzugten Ausführungsform der Erfindung besitzt der erste Umfangsabschnitt eine umfängliche Breite, die geringer ist als die umfängliche Breite des zweiten bevorzugt unteren Umfangsabschnitts. Die Breite des ersten Umfangsabschnitts, die der Breite der zugeführten Folienbahn entspricht, beträgt dabei bevorzugt zwischen 60 und 90 % der umfänglichen Breite des zweiten Umfangsabschnitts. Hierdurch ergibt sich der Vorteil, dass die beiden Längsränder des zweiten Umfangsabschnitts nach dem Umschlagen zuverlässig mit einem ausreichenden Überlapp über den korrespondierenden Randabschnitten des ersten Umfangsabschnitts angeordnet werden können, wenn der Faserschlauch nach dem Verlassen des Wickeldorns und der Zufuhr der unteren zweiten Folienbahn in abgeflachter Form mit einer im Wesentlichen konstanten Vorschubgeschwindigkeit entlang einer Stützfläche bewegt wird.

Um den ersten und den zweiten Umfangsabschnitt miteinander zu verbinden, ist es bei der bevorzugten Ausführungsform der Erfindung vorgesehen, ein einziges Klebeband zuzuführen, welches die gleiche oder bevorzugt auch eine geringfügig größere Breite als der erste Umfangsabschnitt besitzt und sich über die beiden Überlappungsbereiche hinweg erstreckt. Durch die Zufuhr von lediglich einem Klebeband größerer Breite ergibt sich der Vorteil, dass trotz der damit einhergehenden höheren Materialkosten für das Klebeband als solches der logistische Aufwand verringert und die Gefahr von Fehlern beim Zuführen des Klebebandes verkleinert werden.

Nach einem weiteren der Erfindung zugrundeliegenden Gedanken umfasst das Klebeband einen ersten und einen zweiten Klebeabschnitt sowie einen diese miteinander verbindenden Spannabschnitt, der sich oberhalb des Überlappungsbereichs befindet. Dieser Spannabschnitt ist bevorzugt ein thermoplastischer Werkstoff, beispielsweise eine thermoplastische Kunststofffolie, wie z.B. eine Polyethylenfolie, welche durch Einwirkung von Wärme in Umfangsrichtung schrumpft, derart, dass der erste Klebeabschnitt in Richtung des zweiten Klebeabschnitts bewegt wird. Ein solches Klebeband mit einem ersten und zweiten Klebeabschnitt sowie einem diese miteinander verbindenden Spannabschnitt kann beispielsweise durch Aufkleben zweier einzelner Klebebandstreifen auf die Randbereiche eines solchen streifenförmigen thermoplastischen Werkstoffs, beispielsweise eines Folienstreifens, erhalten werden. Dies kann entweder fortlaufend durch Auflegen des thermoplastischen Folienstreifens über die umgeschlagenen Randbereiche des zweiten Umfangabschnitts und anschließendes Aufbringen des Klebebandes erfolgen, oder aber durch Vorkonfektionieren eines solchen Streifens mit zwei seitlich aufgeklebten Klebebändern. Durch diese Ausführungsform der Erfindung ergibt sich der Vorteil, dass sich der Außenfolienschlauch durch Einbringen von Wärme, beispielsweise mittels eines Heißluftgebläses, mit einer gewünschten Spannung an die Außenseite des Fasermaterials anlegen lässt. Hierdurch ergibt sich eine definierte faltenfreie Anlage, die beim Expandieren des Auskleidungsschlauchs in einem zu sanierenden Kanal ein effektives Gegenlager bildet, dessen Außendurchmesser sich mit hoher Präzision einstellen lässt.

Um bei den zuvor beschriebenen Ausführungsformen der Erfindung eine verbesserte Abdichtung des Überlappbereichs gegen den Austritt von umweltschädlichem Styrol, welches in vielen Reaktionsharzen als Lösungsmittel eingesetzt wird, zu erhalten, ist es gemäß einer weiteren Ausführungsform der Erfindung vorgesehen, dass zwischen dem ersten Randabschnitt und dem zweiten Randabschnitt im Überlappungsbereich zusätzlich wenigstens eine Klebstofflage angeordnet wird, welche eine Barriere für den Austritt von Harz und auch von Styroldämpfen aus dem Überlappungsbereich bildet. Die Klebstofflage wird bevorzugt als eine fortlaufende Klebstoffraupe aus geschmolzenem Heißklebstoff auf die Oberseite des radial außenliegenden Randabschnitts, d.h. auf bevorzugt beide seitlichen Randabschnitte des ersten Umfangsabschnitts bei der zweiten zuvor beschriebenen Ausführungsform aufgebracht, bevor die beiden seitlichen Randabschnitte des zweiten Umfangsabschnitts auf die ersten Randabschnitte umgeschlagen werden. Durch den Einsatz einer solchen Heißklebstoffraupe, die nach dem Umschlagen der seitlichen Randabschnitte des unteren zweiten Umfangsabschnitts innerhalb kürzester Zeit erkaltet, ergibt sich der Vorteil, dass beim Umschlagen der Randabschnitte gegebenenfalls entstehende Falten aufgefüllt und ausgeglichen werden, so dass die Gefahr eines Austritts von flüssigem Reaktionsharz beim Zusammenlegen des Auskleidungsschlauchs durch derartige Falten weiter reduziert wird und dadurch die Gefahr eines Austritts von Reaktionsharz auf die Außenseite des Überlappungsbereichs, in welchem das Klebeband zum Verbinden der Randbereiche des ersten Umfangsabschnitts und des zweiten Umfangsabschnitts aufgeklebt wird, verringert ist.

Nach einem weiteren der Erfindung zugrunde liegenden Gedanken wird bei dem erfindungsgemäßen Verfahren zur Herstellung eines zuvor beschriebenen Auskleidungsschlauchs ein mit wenigstens einem bevorzugt durch UV-Licht härtbarem Reaktionsharz getränktes Faserband schraubenförmig überlappend auf einen Innenfolienschlauch aufgewickelt, welcher über einen Wickeldorn geführt ist, um auf dem Innenfolienschlauch eine fortlaufende Lage aus Fasermaterial anzuordnen. Bevorzugt werden dabei mehrere unterschiedliche Lagen von Faserbändern übereinander gewickelt, um die Lage aus Fasermaterial zu erzeugen.

Das erfindungsgemäße Verfahren zeichnet sich dadurch aus, dass die Folienbahn kontinuierlich zugeführt und die beiden Randabschnitte während der Zufuhr über eine Führungseinrichtung um den Umfang der Lage aus Fasermaterial herumgeführt werden. Das Herumführen erfolgt dabei derart, dass im Falle einer einteiligen Folienbahn in wenigstens einem Überlappungsbereich der radial außenliegende Randabschnitt auf der Außenseite des radial innenliegenden Randabschnitts aufliegt. Über die beiden übereinander liegenden Randabschnitte wird nach dem Übereinanderführen ein bevorzugt ebenfalls endlos von einer Rolle zugeführtes Klebeband aufgeklebt, welches bevorzugt hälftig mit der einen Seite den Überlappungsbereich und mit seiner anderen Seite den angrenzenden Randbereich der radial innenliegenden Außenseite des zweiten Randabschnitts überspannt, so dass die beiden Randabschnitte überlappend nach Art einer Überlappnaht miteinander verbunden sind und hierdurch aus der einteiligen Folienbahn ein umfänglich geschlossener Außenfolienschlauch aus UV-undurchlässigem Material fortlaufend erzeugt wird. Obgleich der Außenfolienschlauch bei der einfachsten Ausführungsform der Erfindung im Falle von Auskleidungsschläuchen mit geringen Durchmessern, beispielsweise mit Durchmessern von weniger als 30 cm, grundsätzlich auch aus einem einzigen Folienbahnabschnitt in der zuvor beschriebenen Weise geformt werden kann, wird der Außenfolienschlauch bei der bevorzugten Ausführungsform der Erfindung aus einem ersten oberen und einem zweiten unteren Umfangsabschnitt zusammengesetzt, die entsprechend in Form von zwei kontinuierlich zugeführten Folienbahn bereitgestellt werden. Der erste Umfangsabschnitt wird hierbei in Form der ersten Folienbahn kontinuierlich auf die Oberseite der Lage aus Fasermaterial abgerollt, und der zweite untere Umfangsabschnitt des Außenfolienschlauchs wird bevorzugt ebenfalls kontinuierlich von der gegenüberliegenden Seite aus, d.h. bevorzugt von unten her, über die Führungseinrichtung um die Lage aus Fasermaterial herumgeführt. Hierbei besitzen der erste Umfangsabschnitt und der zweite Umfangsabschnitt eine solche Breite, dass die beiden Randabschnitte des zweiten Umfangsabschnitts in einem ersten und zweiten Überlappungsbereich auf der jeweiligen Oberseite des ersten Umfangsabschnitts flach aufeinander aufliegen. Der erste Umfangsabschnitt und der erste Randbereich des zweiten Umfangsabschnitts wird dann durch einen auf den ersten Überlappungsbereich aufgeklebten ersten Klebebandstreifen und der zweite Randbereich des ersten Umfangsabschnitts und der zweite Randbereich des zweiten Umfangsabschnitts durch einen zweiten, auf den zweiten Überlappungsbereich aufgeklebten Klebebandstreifen miteinander verbunden. Hierbei überdeckt der erste und zweite Klebebandstreifen den jeweiligen Überlappungsbereich und den angrenzenden radial außenliegenden freiliegenden Randbereich des ersten Umfangsabschnitts bevorzugt hälftig.

Um bei den beiden zuvor beschriebenen Ausführungsform der Erfindung die zugehörige Folienbahn um die entsprechenden Randbereiche des bevorzugt mit kontinuierlicher Geschwindigkeit vorgeschobenen, flach auf einer Stützfläche aufliegenden gewickelten Schlauchs aus Fasermaterial - der nachfolgend auch als Faserschlauch bezeichnet wird - herumzuführen, umfasst die Führungseinrichtung bevorzugt ein erstes umlaufendes Bürstband, welches die Außenseite der Folienbahn kontaktiert und den umgeschlagenen, auf der Oberseite des Faserschlauchs aufliegenden Randabschnitt der Folienbahn in Richtung zum freien Randabschnitt hin mit seinen Borsten überstreicht. Hierbei kann die Außenseite des innenliegenden Randabschnitts der einteiligen Folienbahn im Bereich der Oberseite beispielsweise durch ein Bürstrad oder eine Andruckrolle gegen den Faserschlauch gedrängt werden, während das umlaufende Bürstband den oben liegenden zweiten Randabschnitt vorzugsweise entgegen der Schwerkraft in Aufwärtsrichtung über den ersten Randabschnitt bürstet.

Bei der bevorzugten Ausführungsform der Erfindung, bei der der Außenfolienschlauch durch das Verkleben einer ersten und einer zweiten Folienbahn erhalten wird, werden bevorzugt wenigstens zwei umlaufende, bevorzugt bandförmige Bürsteinrichtungen eingesetzt, welche ausschließlich in den Randbereichen an die Oberseite der umgeschlagenen Randabschnitte des bevorzugt flach ausgelegten Faserbandschlauchs im Wesentlichen symmetrisch angestellt sind. Dabei werden lediglich die Randbereiche, nicht jedoch der erste Umfangsabschnitt kontaktiert. Die Umlaufrichtung der an die Außenseite der Folienbahn angestellten Bürstbänder ist dabei gegenläufig aufeinander zu und derart, dass die beiden freien Randabschnitte des zweiten Umfangsabschnitts in Richtung des Zentrums des ersten Umfangsabschnitts hin mit einer Zugkraft beaufschlagt werden, welche die zweite Folienbahn um die Außenseite des Faserbandschlauchs herum führt und gleichzeitig spannt. Durch Verändern des Winkels und/oder der Länge des Kontaktbereichs und/oder der Andruckkraft des jeweiligen umlaufenden Bürstbandes sowie der Umlaufgeschwindigkeit im Verhältnis zur Vorschubgeschwindigkeit des Faserschlauchs lässt sich hierbei eine im Wesentlichen homogene, faltenfreie Anlage der zweiten Folienbahn an der Außenseite der Lage aus Fasermaterial erhalten, so dass nach dem Verbinden des ersten und zweiten Umfangsabschnitts durch Aufbringen der beiden Klebebandstreifen ein Auskleidungsschlauch erhalten wird, dessen Außenfolienschlauch eng und nahezu faltenfrei an der Außenseite der Lage aus harzgetränktem Fasermaterial anliegt. Da die Bürstbänder in diesem Falle dafür sorgen, dass die von unten her zugeführte zweite Folienbahn um die Randabschnitte des innenliegenden, bevorzugt als flache Bahn auf einer Stützfläche geführten Schlauchs aus Fasermaterial herumgeführt und gegen ein Herunterrutschen infolge der Gewichtskraft gehindert werden, ergibt sich durch den Einsatz von wenigstens zwei gegenläufig umlaufenden Bürstbändern der Vorteil, dass auf eine mitunter aufwendig zu fertigende Formschulter aus Blechmaterial vollends verzichtet werden kann. Als Gegenlager für die Bürstbänder dient in diesem Falle die Außenseite des fortlaufend durch Wickeln erzeugten Faserschlauchs, wobei bei der Zufuhr des Fasermaterials entstehende Inhomogenitäten im Material durch die Elastizität der Borsten der Bürstbänder in vorteilhafter Weise kompensiert werden.

Schließlich kann es auch bei der zuletzt beschriebenen Ausführungsform des erfindungsgemäßen Verfahrens vorgesehen sein, dass vor dem Aufkleben der Klebebänder, bzw. des einen Klebebandstreifens, der bevorzugt die gleiche Breite wie der erste Umfangsabschnitt aufweist, auf die Außenseiten des ersten Umfangsabschnitts eine fortlaufende Raupe aus geschmolzenem Heißkleber aufgebracht wird, welcher nach dem Übereinanderführen der seitlichen Randabschnitte in den Überlappungsbereichen erkaltet und hierdurch gegebenenfalls entstehende Inhomogenitäten auffüllt, so dass eine zusätzliche Barriere bereitgestellt wird, die den Austritt von Lösungsmitteldämpfen aus dem Reaktionsharz, wirksam verhindert.

Die Erfindung wird nachfolgend mit Bezug auf die Zeichnungen anhand einer bevorzugten Ausführungsform beschrieben.

In den Zeichnungen zeigen:
- Fig. 1: eine schematische Querschnittsansicht durch einen erfindungsgemäßen Auskleidungsschlauch während seiner Herstellung auf einem angedeuteten Wickeldorn, bei welchem der Außenfolienschlauch aus einer einzigen zugeführten Folienbahn zusammengefügt ist,
- Fig. 2a: eine Querschnittsansicht einer zweiten Ausführungsform der Erfindung, bei welcher der Außenfolienschlauch einen ersten und einen zweiten Umfangsabschnitt umfasst, die durch Verkleben einer ersten und zweiten zugeführten Folie mit Hilfe von einem einzelnen Klebebandstreifen miteinander verbunden sind,
- Fig. 2b: eine schematische Aufsicht auf einen Auskleidungsschlauch gemäß Fig. 2a mit einem zusätzlichen Längszugband,
- Fig. 2c: eine weitere Ausführungsform des erfindungsgemäßen Auskleidungsschlauchs, bei der der Außenfolienschlauch einen ersten und zweiten Umfangsabschnitt umfasst, deren Randbereiche jeweils durch ein aufgerolltes Klebeband miteinander verbunden sind,
- Fig. 2d: eine schematische räumliche Aufsicht auf den Auskleidungsschlauch gemäß Fig. 2c, und
- Fig. 3: eine schematische Seitendarstellung eines auf einem Wickeldorn fortlaufend gefertigten erfindungsgemäßen Auskleidungsschlauchs mit einem ersten und/oder einem zweiten Umfangsabschnitt, die in Form von Folienbahnen zugeführt werden.

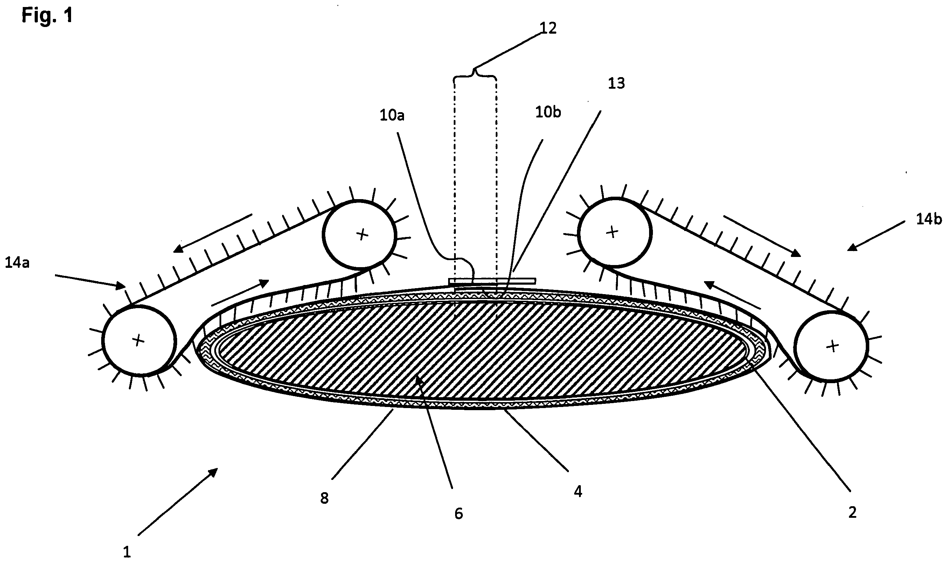

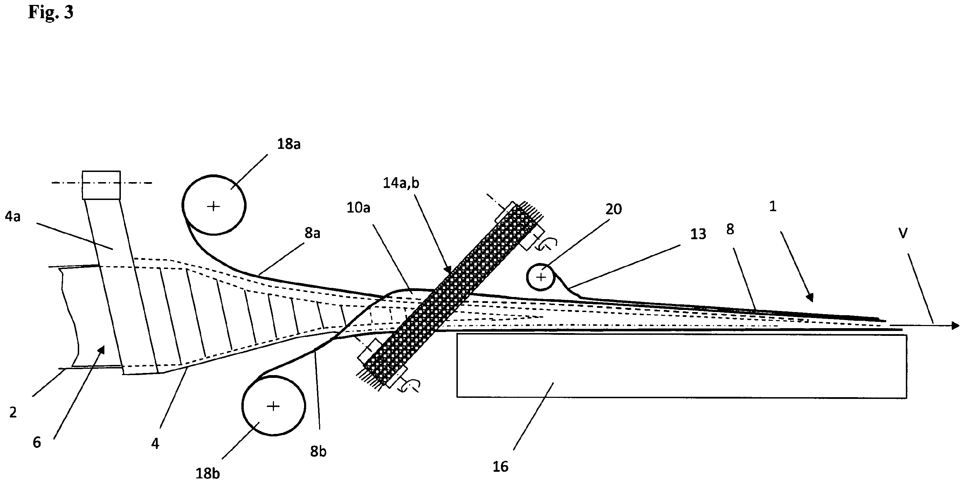

Wie in Fig. 1 gezeigt ist, umfasst ein Auskleidungsschlauch 1 einen Innenfolienschlauch 2, auf dem wenigstens eine Lage aus Fasermaterial 4, insbesondere aus Faserbändern 4a, angeordnet ist, die mit einem durch UV-Licht härtbaren Reaktionsharz getränkt sind. Wie weiterhin der Fig 3, welche das Herstellungsverfahren für den erfindungsgemäßen Auskleidungsschlauch 1 zeigt, entnommen werden kann, werden die Faserbänder 4a mit Hilfe einer Wickelvorrichtung, die einen Wickeldorn 6 aufweist, auf den Innenfolienschlauch 2 aufgewickelt, wie dies beispielsweise in der WO 007/73692 beschrieben ist. Auf der Außenseite der Lage aus Fasermaterial 4 ist ein Außenfolienschlauch 8 angeordnet, der bei der in Fig.1 gezeigten Ausführungsform aus einer einzelnen, für UV-Licht undurchlässigen Kunststofffolie besteht, die als einteilige endlose Folienbahn auf der Unterseite zugeführt wird und durch Umschlagen der Folienränder auf die Oberseite des Fasermaterials geformt wird. Hierbei kommt ein radial innenliegender Randabschnitt 10b in einem Überlappungsbereich 12 auf einem radial außenliegenden Randabschnitt 10a zu liegen. Um die beiden Randabschnitte 10a und 10 b im Anschluss daran zu einem umfänglich geschlossenen Außenfolienschlauch 8 zu verbinden, wird auf die beiden einander überlappenden Randabschnitte ein einseitig klebendes Klebeband 13 bevorzugt hälftig von oben her aufgeklebt, so dass eine Naht ähnlich einer Überlappnaht entsteht, die eine hohe Zugfestigkeit gegenüber in Umfangsrichtung des Außenfolienschlauchs wirkenden Kräften besitzt. Um hierbei die Kunststofffolie, aus der der Außenfolienschlauch 8 geformt ist, um die Randabschnitte des mitunter noch auf dem Wickeldorn 6 geführten Schlauchs aus Fasermaterial 4 herumzuschlagen, sind bevorzugt in Fig. 1 schematisch angedeutete umlaufende Bürsteinrichtungen 14a und 14b vorgesehen, die beispielsweise Polyamidborsten aufweisen können, welche die Oberseite der umgeschlagenen Folienbahn von den Rändern aus zum Überlappungsbereich 12 hin überstreichen. Die Umlaufgeschwindigkeit der beiden Bürstbänder 14a, 14b sowie auch deren Winkel gegenüber der Förderrichtung V des Außenfolienschlauchs ist hierbei bevorzugt dass unter der umgeschlagenen Folienbahn befindliche Lufteinschlüsse zum Überlappungsbereich hin herausgestrichen werden, so dass die Folienbahn des Außenfolienschlauchs 8 eng an der Außenseite des Fasermaterials 4 anliegt.

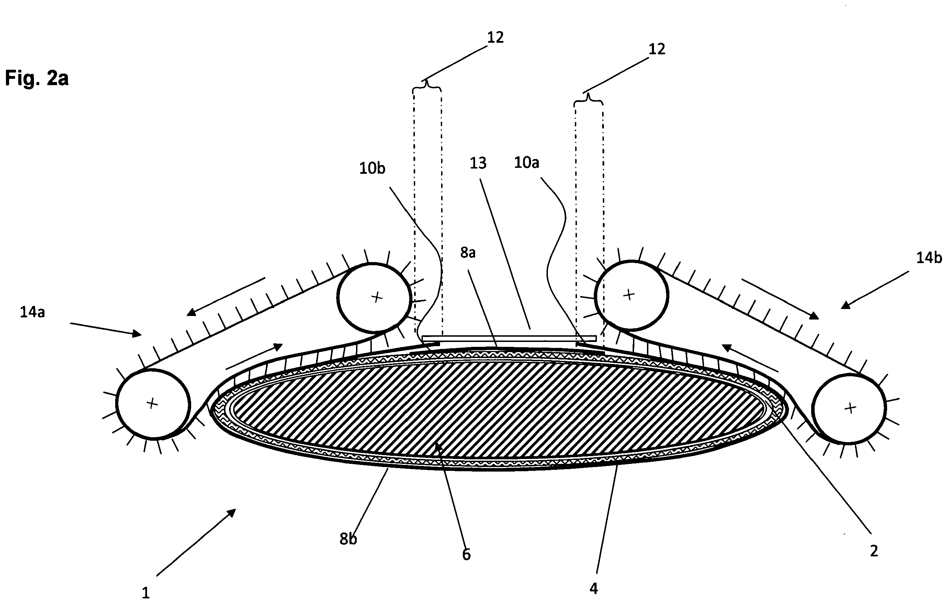

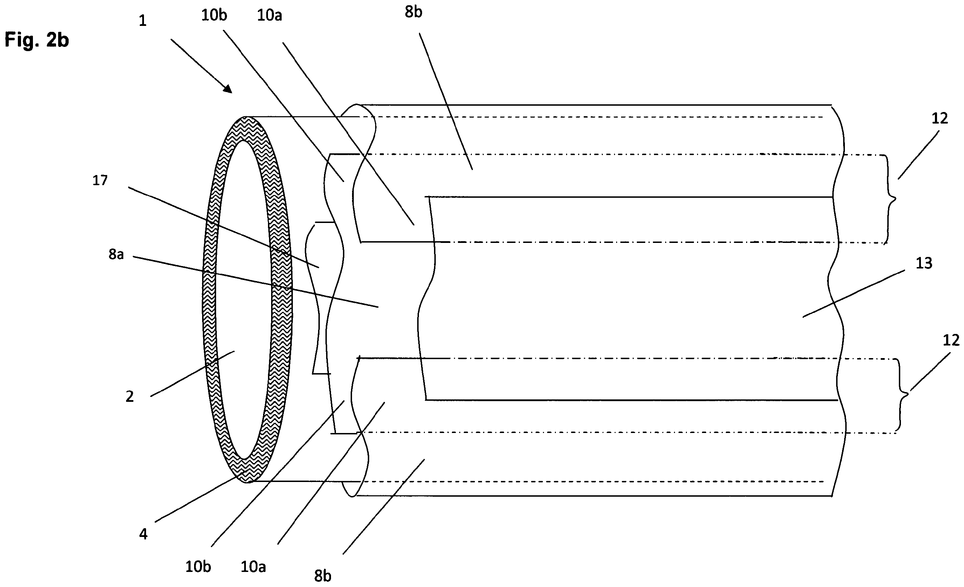

Bei der in Fig. 2a und 2b gezeigten Ausführungsform der Erfindung umfasst der erfindungsgemäße Auskleidungsschlauch 8 einen ersten Umfangsabschnitt 8a, der bevorzugt als endlose Folienbahn von oben her auf den zuvor endlos gefertigten Schlauch aus Fasermaterial 4, der vom Wickeldorn 6 aus mit seiner Vorschubgeschwindigkeit V über eine gestellfeste Stützfläche 16 bewegt wird, zugeführt wird. Die Folienbahn des ersten Umfangsabschnitts 8a kann hierbei beispielsweise von einer Rolle 18a abgerollt werden, wie dies in Fig. 3 angedeutet ist.

Der Außenfolienschlauch 8 umfasst weiterhin einen zweiten Umfangsabschnitt 8b, der bevorzugt von einer zweiten Rolle 18b abgerollt wird, welche sich auf der Unterseite des zugeführten Schlauchs aus Fasermaterial 4 befindet. Um hierbei die beiden Randabschnitte der unteren Folienbahn 8b um den Schlauch aus Fasermaterial 4 herumzuschlagen, werden diese über eine nicht näher gezeigte Führungseinrichtung, z.B. eine bekannte Formschulter oder aber auch über zwei in Fig.2a sowie in Fig.3 angedeutete Bürsteinrichtungen 14a und 14b in Aufwärtsrichtung beaufschlagt. Hierdurch gelangt der in Fig. 2a rechte radial innenliegende Randabschnitt 10b und linke radial innenliegende Randabschnitt 10b des zweiten Umfangsabschnitts 8b auf dem jeweiligen radial außenliegenden Randabschnitt 10a des ersten Umfangsabschnitts 8a zu liegen. Im Anschluss daran wird auf die Oberseite der beiden entstehenden Überlappungsbereiche 12 ein einziger Klebebandstreifen 13 geklebt, welcher eine solche Breite aufweist, dass er den ersten Umfangsabschnitt 8a vollständig überspannt und hierbei die oben liegenden Randabschnitte des zweiten Umfangsabschnittes, d.h. der zweiten zugeführten Folienbahn 8b, beispielsweise um 1 bis 5 Zentimeter überdeckt.

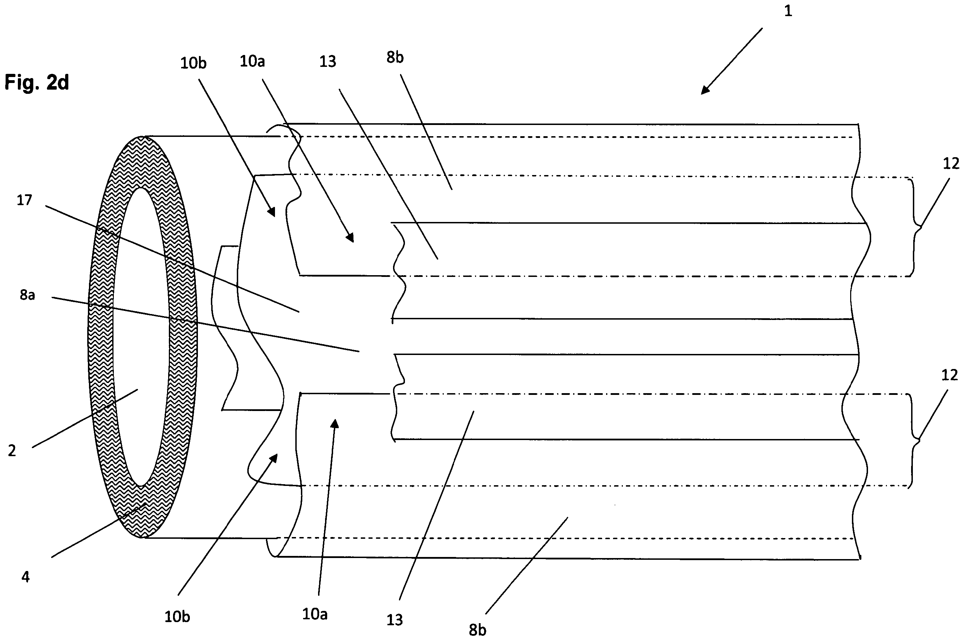

Um ein Auseinanderziehen der schraubenförmigen Wicklungen des Schlauchs aus schraubenartig überlappend gewickelten Faserbändern 4a beim Einziehen des fertigen Auskleidungsschlauchs 1 in einen nicht näher gezeigten Kanal zu verhindern, ist unter dem ersten Umfangsabschnitt 8a des Außenfolienschlauchs 8 bevorzugt ein lediglich in Fig. 2b und 2d schematisch angedeutetes Längszugband 17, beispielsweise ein Band aus Glasfasergewebe, angeordnet, welches über eine zusätzliche Rolle vor dem Zuführen der Folienbahn für den ersten Umfangsabschnitt 8a auf die Oberseite des Schlauchs aus Fasermaterial 4 abgerollt wird. Das Längszugband ist in den übrigen Figuren der Übersichtlichkeit wegen nicht gezeigt.

Das bahnförmige Material zur Bildung des ersten und des zweiten Umfangsabschnitts 8a, 8b ist auf der dem Fasermaterial 4 zugewandten Innenseite bevorzugt mit einem Vliesmaterial versehen, welches vorzugsweise als Polyestervlies bereits bei der Herstellung der Folienbahn auf die Innenseite des ersten und zweiten Umfangsabschnitts 8a, 8b aufkaschiert ist. Durch die an die Oberseite des zweiten Umfangsabschnitts 8b angestellten Bürsteinrichtungen 14a, 14b, die gegebenenfalls zusätzlich auch an die Unterseite des ersten Umfangsabschnitts angestellt sein können und diesen jeweils von der Mitte aus zu den seitlichen Rändern hin überstreichen, kann in Verbindung mit einer auf der Innenseite des Folienmaterials des ersten und zweiten Umfangsabschnitts angeordneten Vliesschicht eine straffe und blasenfreie Anlage des Folienmaterials an der mit flüssigem Reaktionsharz getränkten Lage aus Fasermaterial 4 erhalten werden.

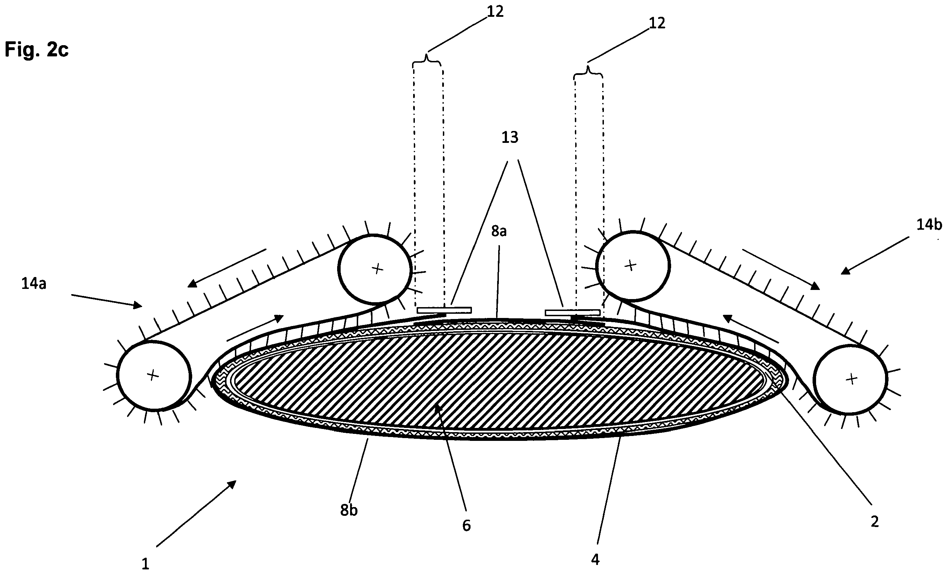

Gemäß der in den Figuren 2c und 2d gezeigten Ausführungsform der Erfindung ist es alternativ möglich, anstelle eines bevorzugt eingesetzten einzelnen breiten Klebebandstreifens, welcher den gesamten freien Abschnitt zwischen den beiden außenliegenden Randabschnitten des zweiten Umfangsabschnitts überspannt, alternativ zwei schmale Klebebandstreifen 13 zu verwenden, welche - ähnlich wie bei der in Fig. 1 gezeigten Ausführungsform - lediglich bevorzugt hälftig die beiden Randbereiche überdecken und in gleicher Weise wie die Folienbahnen für die beiden Umfangsabschnitte 8a, 8b als endloses Klebebandmaterial von einer Rolle 20 zugeführt werden.

### Bezugszeichenliste

- 1: erfindungsgemäßer Auskleidungsschlauch
- 2: Innenfolienschlauch
- 4: Lage aus harzgetränktem Fasermaterial
- 4a: Faserband
- 6: Wickelvorrichtung/Wickeldorn
- 8: Außenfolienschlauch
- 8a: erster Umfangsabschnitt
- 8b: zweiter Umfangsabschnitt
- 10a: Radial innenliegender Randabschnitt
- 10b: Radial außenliegender Randabschnitt
- 12: Überlappbereich
- 13: Klebeband
- 14a: Erste Bürsteinrichtung
- 14b: Zweite Bürsteinrichtung
- 16: Stützfläche
- 17: Längszugband
- 18a: Rolle mit Folienbahn für ersten Umfangsabschnitt
- 18b: Rolle mit Folienbahn für zweiten Umfangsabschnitt
- 20: Klebebandrolle
- V: Vorschubgeschwindigkeit

## Patentansprüche

1. Auskleidungsschlauch (1) zur Auskleidung von Rohrleitungen, der einen Innenfolienschlauch (2), eine auf dem Innenfolienschlauch (2) angeordnete Lage aus Fasermaterial (4) und einen auf der Außenseite des Fasermaterials (4) angeordneten, für UV-Licht undurchlässigen Außenfolienschlauch (8) besitzt, wobei die Lage aus Fasermaterial (4) mit einem flüssigen Reaktionsharz getränkt ist, welches durch Bestrahlen mit UV-Licht aushärtbar ist,
**dadurch gekennzeichnet,**
**dass** der Außenfolienschlauch (8) einen radial innenliegenden Randabschnitt (10b) und einen auf der Außenseite des Randabschnitts (10b) in einem Überlappungsbereich (12) aufliegenden zweiten Randabschnitt (10a) besitzt, die über ein sich in Längsrichtung des Auskleidungsschlauchs (1) erstreckendes Klebeband (13) miteinander verbunden sind.

2. Auskleidungsschlauch nach Anspruch 1,
**dadurch gekennzeichnet,**
**dass** der Außenfolienschlauch (1) einen ersten und einen zweiten Umfangsabschnitt (8a,8b) aufweist, wobei am ersten Umfangsabschnitt (8a) ein erster und ein zweiter radial innenliegender Randabschnitt (10a) und am zweiten Umfangsabschnitt (8b) ein zu diesen Randabschnitten korrespondierender erster und zweiter radial außenliegender Randabschnitt (10b) geformt sind, welche sich in einem ersten und zweiten Überlappungsbereich (12) überlappen und welche durch ein sich in Längsrichtung erstreckendes aufgeklebtes Klebeband (13) miteinander verbunden sind.

3. Auskleidungsschlauch nach Anspruch 2,
**dadurch gekennzeichnet,**
**dass** der erste Umfangsabschnitt (8a) eine umfängliche Breite besitzt, die zwischen 60 und 90 % der umfänglichen Breite des zweiten Umfangsabschnitts (8) beträgt.

4. Auskleidungsschlauch nach Anspruch 2 oder 3,
**dadurch gekennzeichnet,**
**dass** der erste Umfangsabschnitt (8a) und der zweite Umfangsabschnitt (8b) durch einen einzigen Klebebandstreifen miteinander verbunden sind, welcher die gleiche oder eine größere Breite als der erste Umfangsabschnitt (8a) besitzt und sich über die beiden Überlappungsbereiche (12) hinweg erstreckt.

5. Auskleidungsschlauch nach einem der vorhergehenden Ansprüche,
**dadurch gekennzeichnet,**
**dass** das Klebeband (13) eine ersten und zweiten Klebeabschnitt sowie einen diese miteinander verbindenden Spannabschnitt umfasst, der sich oberhalb des Überlappungsbereichs (12) befindet und der insbesondere aus einem thermoplastischen Werkstoff besteht, welcher durch Einwirkung von Wärme in Umfangsrichtung schrumpft, derart, dass der erste Klebeabschnitt in Richtung des zweiten Klebeabschnitts bewegt wird.

6. Auskleidungsschlauch nach einem der vorhergehenden Ansprüche,
**dadurch gekennzeichnet,**
**dass** der erste Randabschnitt und der zweite Randabschnitt (10a, 10b) im Überlappungsbereich (12) zusätzlich durch wenigstens eine sich in Längsrichtung des Auskleidungsschlauchs (1) erstreckende Klebstofflage, insbesondere aus erkaltetem Heißklebstoff, miteinander verbunden sind.

7. Verfahren zur Herstellung eines Auskleidungsschlauchs nach einem der Ansprüche 1 bis 6, bei dem wenigstens ein mit einem flüssigen, durch UV-Licht härtbaren Reaktionsharz getränktes Faserband (4a) schraubenförmig überlappend auf einen über einen Wickeldorn (6) geführten Innenfolienschlauch (2) gewickelt und auf die fortlaufend entstehende Lage aus Fasermaterial (4) ein Außenfolienschlauch (8) aufgebracht wird, der durch Verbinden der Randabschnitte (10a, 10b) wenigstens einer für UV-Licht undurchlässigen Folienbahn (18a, 18b) erzeugt wird,
**dadurch gekennzeichnet, dass**
die Folienbahn (18a, 18b) kontinuierlich zugeführt und die beiden Randabschnitte (10a, 10b) während der Zufuhr über eine Führungseinrichtung (14a, 14b) um den Umfang der Lage aus Fasermaterial (4) herum geführt werden, derart, dass in wenigstens einem Überlappungsbereich (12) der radial außen liegenden Randabschnitt (10a) auf der Außenseite eines radial innenliegenden Randabschnitts (10b) aufliegt, und dass die Längsränder der Randabschnitte im Überlappungsbereich (12) durch ein Klebeband (13) miteinander verbunden werden, welches mit seiner klebenden Seite fortlaufend auf den Überlappungsbereich (12) aufgeklebt wird.

8. Verfahren nach Anspruch 7,
**dadurch gekennzeichnet,**
**dass** der Außenfolienschlauch (8) einen ersten und einen zweiten Umfangsabschnitt (8a, 8b) aufweist, wobei der erste Umfangsabschnitt (8a) als Folienbahn (18a) kontinuierlich auf die Oberseite der Lage aus Fasermaterial (4) aufgebracht wird, und der zweite Umfangsabschnitt (8b) kontinuierlich von der gegenüberliegenden Seite aus über die Führungseinrichtung (14a, 14b) um die Lage aus Fasermaterial (4) herumgeführt wird, derart, dass die beiden Randabschnitte (10a, 10b) des zweiten Umfangsabschnitts in einem ersten und zweiten Überlappungsbereich (12) auf der jeweiligen Oberseite des ersten Umfangsabschnitts (8a) aufliegen, und dass zum Verbinden des ersten und zweiten Umfangsabschnitte (8a, 8b) ein erstes Klebeband (13) auf den ersten Überlappungsbereich (12) und ein zweites Klebeband auf den zweiten Überlappungsbereich (12) aufgeklebt wird, oder ein den zweiten oberen Umfangsabschnitt überspannendes einziges Klebeband (12) über den ersten und den zweiten Überlappungsbereich geklebt wird.

9. Verfahren nach Anspruch 7 oder 8,
**dadurch gekennzeichnet,**
**dass** die Führungseinrichtung wenigstens ein umlaufendes Bürstband (14a, 14b) umfasst, welches die Außenseite der Folienbahn kontaktiert, um diese vor dem Aufbringen des Klebebandes (13) an die Lage aus Fasermaterial (4) anzudrücken und zu straffen.

10. Verfahren nach einem der Ansprüche 7 bis 9,
**dadurch gekennzeichnet,**
**dass** auf den radial außen liegenden Randabschnitt (10a) und/oder den radial innenliegenden Randabschnitt (10b) vor dem Aufkleben des Klebebandes (13) eine zusätzliche Raupe aus Klebstoff, insbesondere aus geschmolzenem flüssigem Heißklebstoff, fortlaufend aufgebracht wird.

## Claims

1. A tubular liner (1) for lining pipelines, which has an inner tubular film (2), a layer of fibrous material (4) which is arranged on the inner tubular film (2), and an outer tubular film (8) arranged on the outer side of the fibrous material (4) and is impermeable to UV light, wherein the layer of fibrous material (4) is impregnated with a liquid reaction resin which can be cured by irradiation with UV light,
**characterised in that**
the outer tubular film (8) has a radially inner edge portion (10b) and a second edge portion (lOa) which lies on the outer side of the edge portion (10b) in a region of overlap (12), which portions are joined together via an adhesive tape (13) which extends in the longitudinal direction of the tubular liner (1).

2. A tubular liner according to Claim 1,
**characterised in that**
the outer tubular film (1) has a first and a second peripheral portion (8a, 8b), with a first and a second radially inner edge portion (10a) being formed on the first peripheral portion (8a), and a first and second radially outer edge portion (10b) corresponding to these edge portions being formed on the second peripheral portion (8b), which edge portions overlap in a first and second region of overlap (12) and which are joined together by a glued-on adhesive tape (13) extending in the longitudinal direction.

3. A tubular liner according to Claim 2,
**characterised in that**
the first peripheral portion (8a) has a peripheral width which amounts to between 60 and 90% of the peripheral width of the second peripheral portion (8).

4. A tubular liner according to Claim 2 or 3,
**characterised in that**
the first peripheral portion (8a) and the second peripheral portion (8b) are joined together by a single strip of adhesive tape which is of the same or a greater width than the first peripheral portion (8a) and extends over the two regions of overlap (12).

5. A tubular liner according to one of the preceding claims,
**characterised in that**
the adhesive tape (13) comprises a first and second adhesive portion and also a tensioning portion which joins them together and which is located above the region of overlap (12) and which consists in particular of a thermoplastic material which shrinks in the peripheral direction due to the action of heat such that the first adhesive portion is moved in the direction of the second adhesive portion.

6. A tubular liner according to one of the preceding claims,
**characterised in that**
the first edge portion and the second edge portion (10a, 10b) in the region of overlap (12) are additionally joined together by at least one adhesive layer, in particular made of cooled hot-melt adhesive, extending in the longitudinal direction of the tubular liner (1).

7. A method for producing a tubular liner according to one of Claims 1 to 6, in which at least one fibrous strip (4a) impregnated with a liquid reaction resin which can be hardened by UV light is wound helically in an overlapping manner onto an inner tubular film (2) which is guided over a mandrel (6) and an outer tubular film (8) is applied to the continuously produced layer of fibrous material (4), which outer film is produced by joining the edge portions (10a, 10b) of at least one film web (18a, 18b) which is impermeable to UV light,
**characterised in that**
the film web (18a, 18b) is supplied continuously and the two edge portions (10a, 10b) during this supplying are guided by means of a guide means (14a, 14b) around the periphery of the layer of fibrous material (4) such that in at least one region of overlap (12) the radially outer edge portion (10a) lies on the outer side of a radially inner edge portion (10b), and that the long edges of the edge portions are joined together in the region of overlap (12) by an adhesive tape (13) which is glued with its adhesive side continuously onto the region of overlap (12).

8. A method according to Claim 7,
**characterised in that**
the outer tubular film (8) has a first and a second peripheral portion (8a, 8b), the first peripheral portion (8a) being applied as a film web (18a) continuously to the upper side of the layer of fibrous material (4), and the second peripheral portion (8b) being guided continuously from the opposite side by means of the guide means (14a, 14b) around the layer of fibrous material (4) such that the two edge portions (10a, 10b) of the second peripheral portion lie in a first and second region of overlap (12) on the respective upper side of the first peripheral portion (8a), and that in order to join the first and second peripheral portions (8a, 8b) a first adhesive tape (13) is glued onto the first region of overlap (12) and a second adhesive tape is glued onto the second region of overlap (12), or a single adhesive tape (12) which spans the second upper peripheral portion is glued over the first and the second region of overlap.

9. A method according to Claim 7 or 8,
**characterised in that**
the guide means comprises at least one revolving brush belt (14a, 14b) which contacts the outer side of the film web in order to press it against the layer of fibrous material (4) and tauten it prior to the application of the adhesive tape (13).

10. A method according to one of Claims 7 to 9,
**characterised in that**
an additional bead of adhesive, in particular of molten liquid hot-melt adhesive, is continuously applied to the radially outer edge portion (10a) and/or the radially inner edge portion (10b) prior to gluing on the adhesive tape (13).

## Revendications

1. Gaine de revêtement (1) pour le revêtement de conduites, laquelle possède une gaine intérieure de film (2), une couche de matière fibreuse (4) disposée sur la gaine intérieure de film (2) et une gaine extérieure de film (8) imperméable à la lumière UV disposée sur la face extérieure de la matière fibreuse (4), dans laquelle la couche de matière fibreuse (4) est imprégnée d'une résine réactive liquide, laquelle est durcissable par exposition à de la lumière UV,
**caractérisée en ce que** la gaine extérieure de film (8) possède une portion de bord radialement interne (10b) et une deuxième portion de bord (10a) reposant sur la face extérieure de la portion de bord (10b) dans une zone de chevauchement (12), lesquelles sont reliées l'une à l'autre par l'intermédiaire d'un ruban adhésif (13) s'étendant dans la direction longitudinale de la gaine de revêtement (1).

2. Gaine de revêtement selon la revendication 1,
**caractérisée en ce que** la gaine extérieure de film (1) comprend une première et une deuxième portion périphérique (8a, 8b), dans laquelle sont formées, sur la première portion périphérique (8a), une première et une deuxième portion de bord radialement interne (10a), et sur la deuxième portion périphérique (8b), une première et une deuxième portion de bord radialement externe (10b) correspondant à ces portions de bord, lesquelles se chevauchent dans une première et une deuxième zone de chevauchement (12) et lesquelles sont reliées l'une à l'autre par l'intermédiaire d'un ruban adhésif (13) collé s'étendant dans la direction longitudinale.

3. Gaine de revêtement selon la revendication 2,
**caractérisée en ce que** la première portion périphérique (8a) possède une largeur périphérique qui se situe entre 60 et 90 % de la largeur périphérique de la deuxième portion périphérique (8).

4. Gaine de revêtement selon la revendication 2 ou la revendication 3,
**caractérisée en ce que** la première portion périphérique (8a) et la deuxième portion périphérique (8b) sont reliées l'une à l'autre par l'intermédiaire d'une seule bande de ruban adhésif, laquelle possède la même largeur que la première portion périphérique (8a) ou une largeur supérieure et s'étend sur les deux zones de chevauchement (12).

5. Gaine de revêtement selon l'une des revendications précédentes,
**caractérisée en ce que** le ruban adhésif (13) comporte une première et une deuxième portion adhésive ainsi qu'une portion de serrage reliant celles-ci l'une à l'autre, laquelle se trouve au-dessus de la zone de chevauchement (12) et est constituée en particulier d'un matériau thermoplastique qui rétrécit dans la direction périphérique sous l'action de la chaleur de telle sorte que la première portion adhésive soit déplacée dans la direction de la deuxième portion adhésive.

6. Gaine de revêtement selon l'une des revendications précédentes,
**caractérisée en ce que** la première portion de bord et la deuxième portion de bord (10a, 10b) sont reliées l'une à l'autre dans la zone de chevauchement (12) en outre par l'intermédiaire d'au moins une couche d'adhésif, en particulier d'adhésif thermofusible refroidi, s'étendant dans la direction longitudinale de la gaine de revêtement (1).

7. Procédé pour la production d'une gaine de revêtement selon l'une des revendications 1 à 6, dans lequel au moins un ruban de fibres (4a) imprégné de résine réactive liquide, durcissable à la lumière UV, est enroulé par chevauchement hélicoïdal sur une gaine intérieure de film (2) guidée sur un mandrin de bobinage (6) et une gaine extérieure de film (8) est appliquée sur la couche de matière fibreuse (4) obtenue en continu, laquelle est créée par liaison des portions de bord (10a, 10b) d'au moins une bande de film imperméable à la lumière UV (18a, 18b),
**caractérisé en ce que** la bande de film (18a, 18b) est acheminée en continu et les deux portions de bord (10a, 10b) sont guidées autour de la périphérie de la couche de matière fibreuse (4) pendant l'acheminement par l'intermédiaire d'un dispositif de guidage (14a, 14b) de telle sorte que, dans au moins une zone de chevauchement (12), la portion de bord radialement externe (10a) repose sur la face extérieure d'une portion de bord radialement interne (10b), et **en ce que** les bords longitudinaux des portions de bord sont reliés l'un à l'autre dans la zone de chevauchement (12) par l'intermédiaire d'un ruban adhésif (13), lequel est collé par sa face adhésive en continu sur la zone de chevauchement (12).

8. Procédé selon la revendication 7,
**caractérisé en ce que** la gaine extérieure de film (8) comprend une première et une deuxième portion périphérique (8a, 8b), dans lequel la première portion périphérique (8a) est appliquée en continu sur la face supérieure de la couche de matière fibreuse (4) sous la forme d'une bande de film (18a), et la deuxième portion périphérique (8b) est guidée en continu autour de la couche de matière fibreuse (4) à partir de la face opposée par l'intermédiaire du dispositif de guidage (14a, 14b), de telle sorte que les deux portions de bord (10a, 10b) de la deuxième portion périphérique reposent dans une première et une deuxième zone de chevauchement (12) sur la face supérieure respective de la première portion périphérique (8a), et **en ce que**, pour la liaison des première et deuxième portions périphériques (8a, 8b), un premier ruban adhésif (13) est collé sur la première zone de chevauchement (12) et un deuxième ruban adhésif est collé sur la deuxième zone de chevauchement (12), ou un seul ruban adhésif (12) recouvrant la deuxième portion périphérique supérieure est collé sur la première et la deuxième zone de chevauchement.

9. Procédé selon la revendication 7 ou la revendication 8,
**caractérisé en ce que** le dispositif de guidage comporte au moins un ruban de brossage en rotation (14a, 14b), lequel entre en contact avec la face extérieure de la bande de film afin de plaquer et de tendre celle-ci avant l'application du ruban adhésif (13) sur la couche de matière fibreuse (4).

10. Procédé selon l'une des revendications 7 à 9,
**caractérisé en ce qu'**une chenille supplémentaire d'adhésif, en particulier d'adhésif thermofusible liquide fondu, est appliquée en continu sur la portion de bord radialement externe (10a) et/ou la portion de bord radialement interne (10b) avant le collage du ruban adhésif (13).
